(19) Europäisches Patentamt
European Patent Office
Office européen des brevets

(11) EP 1 532 846 B1

# (12) EUROPEAN PATENT SPECIFICATION

(45) Date of publication and mention of the grant of the patent:
**28.04.2010 Bulletin 2010/17**

(21) Application number: **04723389.5**

(22) Date of filing: **25.03.2004**

(51) Int Cl.:
***H05B 37/02*** *(2006.01)*

(86) International application number:
**PCT/JP2004/004234**

(87) International publication number:
**WO 2004/086824 (07.10.2004 Gazette 2004/41)**

## (54) SIMULATION METHOD, PROGRAM, AND SYSTEM FOR CREATING A VIRTUAL THREE-DIMENSIONAL ILLUMINATED SCENE

SIMULATIONSVERFAHREN, PROGRAMM UND VORRICHTUNG ZUM ERZEUGEN EINER VIRTUELLEN DREI-DIMENSIONALEN BÜHNE

PROCEDE, PROGRAMME ET SYSTEME DE SIMULATION SERVANT A CREER UNE SCENE VIRTUELLE TRIDIMENSIONNELLE ECLAIREE

(84) Designated Contracting States:
**AT BE BG CH CY CZ DE DK EE ES FI FR GB GR HU IE IT LI LU MC NL PL PT RO SE SI SK TR**

(30) Priority: **26.03.2003 JP 2003085577**

(43) Date of publication of application:
**25.05.2005 Bulletin 2005/21**

(73) Proprietor: **Panasonic Electric Works Co., Ltd.**
**Kadoma-shi**
**Osaka (JP)**

(72) Inventor: **SHIBANO, Nobuyuki,**
**Panasonic Electric Works Co., Ltd.**
**Kadoma-shi, Osaka 571-8686 (JP)**

(74) Representative: **Appelt, Christian W.**
**Forrester & Boehmert**
**Pettenkoferstrasse 20-22**
**80336 München (DE)**

(56) References cited:
**EP-A- 0 495 305** **WO-A-02/101702**
**WO-A-03/015477** **US-A- 5 867 166**

- **"Martin ShowDesigner (MSD 4.2)" September 2000 (2000-09), MARTIN PROFESSIONAL A/S , AARHUS, DENMARK , XP002287388**
- **AUTODESK WHITE PAPER: "Lightscape 3.2: Concepts and Techniques in Computer Generated Lighting Simulation" 2001, AUTODESK INC , SAN RAFAEL, CA, USA , XP002287389**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 532 846 B1

## Description

The present invention is directed to a simulation method, a simulation program, and a simulation system for creating a virtual three-dimensional scene illuminated with one or more lighting fixture, and more particularly for realizing reproduction of dynamic image of the varying illuminated scene.

BACKGROUND ART

There have been proposed methods for simulating a three-dimensiorial illuminated scene with moving lighting fixtures. Typical methods are radiosity technique and laytrace technique both of which rely upon considerably complex arithmetic and therefore suffer from a delay in reproducing the illuminated scene, particularly with the use of a readily-available computing equipment. Because of this insufficiency, the above methods are practically limited to the reproduction of one still image of the illuminated scene, and are not well adapted for reproduction of dynamic image of the varying illuminated scene.

From document EP 0 495 305 B1 a method for creating and controlling lighting designs is known, which discloses means to define a 3-dimensional object to be illuminated and means for adjusting lighting parameters.

Furthermore from document US 5,867,166 a method and a system for generating images is known, while an image pre-processor is provided, which is capable of selecting potentially visible objects, which are not currently shown in the current screen or view volume, in order to provide calculation for these external objects in case these objects should intersect the view volume.

DISCLOSURE OF THE INVENTION

In view of the above problem, the present invention has been accomplished to provide a unique method, program, and system for simulating a virtual three-dimensional illuminated scene which is capable of rapidly reproducing the varying illuminated scene.

This object is solved by a simulation method according to claim 1, a simulation program according to claim 3 and a simulation system according to claim 4. Claim 2 refers to a specific advantageous realization of the method according to claim 1, claims 5 to 10 relates to specifically advantageous realizations of the system according to claim 4.

The simulation method of the present invention is provided to create the virtual three-dimensional scene illuminated at least one lighting fixture, and includes the steps of obtaining an object data with regard to a three-dimensional object to be illuminated with the lighting fixture, and specifying the lighting fixture and determining a position of the lighting fixture within a space of the three-dimensional object, in order to obtain output characteristic data as well as positional data of the lighting fixture. The object data is then transformed into an array of discrete elements to obtain object color component values inherent to each discrete element. The object color component values are assigned respectively to color components in a predetermined color space for designating the color of each discrete element. The object data is processed together with the output characteristic data and the positional data of the lighting fixture to obtain lamp color component values given to each of the discrete elements. The lamp component values are assigned respectively to the color components in the color space for designating the color of the lighting fixture illuminating each destined discrete element. Based upon the above processing, there are formed a plurality of lamp-by-element tables each being associated with each of the discrete elements, and storing the lamp color component values given to each corresponding one of the discrete elements. Then, the method goes to vary at least one of the output characteristic data and the positional data of the lighting fixture, and to re-calculate the lamp color component values given from the lighting fixture in order to obtain an updated color distribution. The updated color distribution is processed for rendering a view of the three-dimensional scene of the object.

The novel feature of the present invention resides in that the above re-calculation includes the steps of determining the discrete elements to be illuminated by the lighting fixture varying its output characteristic data and/or its positional data, referring the lamp-by-element tables only associated with thus determined discrete elements and modifying the lamp color component values stored in the referred lamp-by-element tables as a function of the output characteristic data and the positional data being varied, and allocating the modified color component values to each of the corresponding, discrete elements and combining the modified color component values to the object color component values of each discrete element, thereby realizing the updated color distribution over the entire array of the discrete elements.

Thus, the re-calculation of the lamp color component values can be only limited to the discrete elements being determined to be influenced by the change in the output characteristic and/or the position of the lighting fixture, which greatly reduces the calculation load and therefore enables to rapidly reproducing the lighting effect in prompt response to the varying output characteristic and/or the position of the lighting fixture. Accordingly, it is readily possible to simulate the continuously-changing illuminated scene of the object as a dynamic image.

In a preferred embodiment, two or more lighting fixtures are selected and specified with respect to the output-characteristic data as well as the positional data. In this instance, two or more the lighting fixtures are selected as variable components, and are varied in at least one of the output characteristic data and the positional data to determine the discrete elements to be illuminated by the lighting fixtures selected as the variable components. Then, reference is made to the lamp-by-element tables only associated with thus determined discrete elements in order to modify the lamp color component values stored in the referred lamp-by-element tables. Thereafter, it is made to sum the lamp color component values in each of the referred lamp-by-element tables to give summed lamp color component values associated to each discrete element, and allocating the summed lamp color component values to the discrete elements, thereby realizing the updated color distribution over the array of the discrete elements.

The present invention also provides a simulation program for achieving the above method. The program is to be stored in a recordable medium for execution a computer and includes an input module which provides an input interface for entry of the object data with regard to the three-dimensional object to be illuminated with the lighting fixture, a lamp setting module which provides a lamp setting interface for selecting one or more of the lighting fixtures and determining position of the selected lighting fixtures within the space of the three-dimensional object, and a lighting data processing module which gives output characteristic data and positional data of the selected lighting fixtures in response to the selection of the lighting fixture and the position thereof received at the lamp setting interface. An object processing module is included to transform the object data into an array of discrete elements, and to obtain object color component values inherent to each discrete element. Also a reference data generating module is included to calculate the object data, and the output characteristic data as well as the positional data of each of the selected lighting fixtures in order to obtain lamp color component values given to each of the discrete elements, and to provide a plurality of lamp-by-element tables each corresponding to each one of the discrete elements and storing the lamp color component values. The lamp-by-element tables are located in a memory to be referred to thereafter. Further, the program includes a lighting control module which provides a lighting control interface for selecting at least one of the lighting fixtures and for selecting changes in at least one of the output characteristic data and the positional data of the lighting fixture. A re-calculation module is given to determine the discrete elements to be illuminated by the lighting fixture, and to refer to the lamp-by-element tables only associated with thus determined discrete elements. The re-calculation module modifies the lamp color component values stored in the referred lamp-element tables as a function of the output characteristic data and the positional data being varied. Also included in the program is a color allocating module which allocates the modified color component values to each corresponding one of the discrete elements and combines the modified color component values to the object color component values of each discrete element to thereby realize the updated color distribution over the entire array of the discrete elements. Further, an image producing module is included to process the updated color distribution for rendering the view of the three-dimensional illuminated scene of the object, and generating a image signal for presenting the view on a display.

The present invention further provides a simulation system for accomplishing the above method. The system is realized by a computer with an input device and the display, and includes an input interface for entry of an object data with regard to the three-dimensional object, a lamp setting interface for selecting one or more the lighting fixtures and for determining position of the selected lighting fixture, and a lighting data processing unit which gives output characteristic data and positional data of the selected lighting fixture in response to the selection of the lighting fixture and the position thereof. An object processing unit is provided to transform the object data into an array of discrete elements, and to obtain object color component values inherent to each discrete element. Also included in the system is a reference data generating unit which calculates the object data, and the output characteristic data as well as the positional data of each of the selected lighting fixtures in order to obtain lamp color component values given to each of the discrete elements, and to provide a plurality of lamp-by-element tables each corresponding to each one of the discrete elements and storing the lamp color component values. The system includes a lighting control interface for selecting at least one of the lighting fixtures and for selecting changes in at least one of the output characteristic data and the positional data of the lighting fixture.

A re-calculation unit is included to determine the discrete elements to be illuminated by the lighting fixture, to refer to the lamp-by-element tables only associated with the determined discrete elements. Then, the re-calculation unit modifies the lamp color component values stored in the referred lamp-element tables as a function of the output characteristic data and the positional data being varied. Also included in the program is a color allocating unit which allocates the modified color component values to each corresponding one of the discrete elements and combines the modified color component values to the object color component values of each discrete element to thereby realize the updated color distribution over the entire array of the discrete elements. Further, an image producing unit is included to process the updated color distribution for rendering the view of three-dimensional illuminated scene of the object, and generating the image signal for presenting the view on the display.

Preferably, the re-calculation unit includes an filter that retrieves the output characteristic data and the positional data of the lighting fixtures selected at the lamp setting interface, and determines which one or ones of the discrete elements are assigned to have the lamp color components values each of a sufficient level above a threshold, and defines thus determined discrete elements as active elements. Thus, the filter enables to refer to the lamp-by-element tables only associated with the active elements

The image producing unit is preferred to include a viewpoint selector which provides multiple viewpoints for the three-dimensional illuminated scene of the object, and selects anyone of the viewpoints in generating the image signal for presenting the view on the display. This feature can give enhanced preview capability for examining the lighting effect of the object.

Further, the image producing unit may be designed to produce the view of the three-dimensional illuminated scene of the object each time the re-calculating means operates to modify the lamp color component values, and to generate the image signals in succession for presenting the views as a movie.

In this connection, the system may include a raster memory that records the series of the image signals for replaying the movie for easy confirmation of the lighting effect.

The system may further include a fixture having a control output interface for connection with the actual lighting fixtures. The control output interface processes the image signals recorded in the raster memory to generate a control signal for actuating the lighting fixtures in coincidence with the changes made for at least one of the output characteristic data and the positional data of the lighting fixtures. With this result, it is easy to control the actual lighting fixtures in exact harmony with the simulated lighting sequence.

Preferably, the system may include a lighting data input interface for receiving a control input which selects one or more of the lighting fixture, and describes a lighting schedule indicating a time-series of changes intended for at least one of the output characteristic data and the positional data of the selected lighting fixture. The lighting data input interface transmits the control input to the re-calculating unit for modifying the lamp color component values in accordance with the predetermined schedule of changes. With the inclusion of the light data input interface, it is easy to simulate and confirm the intended lighting schedule made at a dedicated lighting control board designed for controlling the lighting fixtures.

These and still other advantageous features of the present invention will be made apparent from the following description of the preferred embodiment of the present invention when taken in conjunction with the attached drawings.

## BRIEF DESCRIPTION OF THE DRAWINGS

FIG. 1 is a block diagram of a simulation system in accordance with a preferred embodiment of the present invention;
FIG. 2 is a block diagram illustrating a simulation program of the above embodiment;
FIG. 3 a flow chart illustrating the operation of the above system;
FIG. 4 is a perspective view of a three-dimensional object to be illuminated;
FIG. 5 is a chart illustrating the object divided into discrete elements and lamp-by-element tables assigned to each of the elements;
FIG. 6 is chart illustrating data structures of tables utilized in the above system;
FIGS. 7 and 8 are perspective view of the simulated scenes respectively with differently lighting conditions; and
FIG. 9 is a view illustrating a simulated image on a display of the above system.

## BEST MODES FOR CARRYING OUT THE INVENTIONS

Referring now to FIG. 1, there is shown a simulation system in accordance with the present invention. The simulation system is made for creating a virtual three-dimensional scene illuminated with one or more lighting fixtures, and is adapted for, but not limited to, stage lighting with the use of multiple lighting fixtures. Although the illustrated embodiment explain the system with five (5) lighting fixtures or lamps $\mathbf{L_{001}}$ to $\mathbf{L_{005}}$ only for simplicity, the system should not interpreted to be limited to the number of the lighting fixtures. The system includes a computer **10** with an input device **12,** and a display **14.** The computer is programmed to give functional units and interfaces as illustrated in FIG. 1 for simulating the illuminated scene. An input interface **20** is included in the system to give object data describing a three-dimensional object **200,** i.e., a stage configuration to be illuminated, as shown in FIG. 4. For this purpose, the input interface **20** is arranged to have a drawing capability of creating the three-dimensional object **200** step-by-step using the input device **12,** i.e., keyboard and mouse. In addition, the input interface **20** may be designed to accept an image file to translate its content into the three-dimensional object of a suitable format to be processed in the system.

An object processing unit **22** is included to transform the thee-dimensional object **200** into an array of discrete elements, as shown in FIG. 5, and to obtain object color component values inherent to each discrete element. The object color component values denote intensities of individual color components, for example, R, G, and B components of a predetermined color space, and therefore are combined to specify the color of each discrete element. In the present embodiment, the object color component (R, G, B) value is set to be between zero (0) and (1), and a corresponding color is determined as a function of the individual color components (R, G, B). The object color component values for each discrete element are recorded together with coordinate of the element into an object-info table **32** that has a data structure shown in FIG. 6, and is loaded in a memory **30**.

The system includes a lamp setting interface **40** for specifying one or more of the lighting fixtures utilized for illuminating the object and the position thereof within a space of the three-dimensional object. For this purpose, the lamp setting interface **40** is designed for prompting a user to select the lighting fixture by its identification code or name from those of preset ones. Associated with the lamp setting interface **40** is a lighting data processing unit **42** which fetches output characteristic data of the selected lighting fixture from an output characteristic data table **34** provided in the memory **30** and forward the data to a reference data generating unit **52** for further processing. The output characteristic data table **34** stores the lamp component (R, G, B) values together with direction-dependent parameters for each of the lighting fixtures, as shown in FIG. 6. The direction-dependent parameters are defined, based upon the British Zonal Classification, to give a ratio (percentage) of the intensity (e.g., candela) of the light radiating to a particular point on the surface of a unit sphere from the center of the unit sphere where the lighting fixture is supposed to be located. The point on the surface of the unit sphere is represented by the latitude and longitude of the unit sphere. Thus, given the positional data of the lighting fixture within the space of the three-dimensional object, it is easy to calculate the lamp color component values of the light received at any point or element of the object from the selected lighting fixture. The calculation is made at the reference data generating unit 52 based upon the output of the fighting data processing unit **42.** In short, the lighting data processing unit **42** fetches, from the lamp output characteristic data table **34,** the output characteristic data of the selected lighting fixture, and passes the data together with the coordinates of each discrete element to the reference data generating unit **52.**

Based upon the data from the unit **42,** the reference data generating unit **52** calculates the lamp color component (R, G, B) values received at each discrete element of the object **200** from each of the selected lighting fixtures, and builds up a lamp-by-element table **36** for each of the discrete elements. Each of the lamp-by-element tables **36** lists the lamp color component (R, G, B) values of the individual lighting fixtures illuminating each corresponding discrete element, together with the summed component values, as shown in FIGS. 5 and 6. Each of the lamp color component values (Cp) is calculated by the following equation.

$$Cp = Lcd \cdot \cos\theta / r^2 \qquad (1)$$

where Lcd is an intensity of the color component value in candela,
cosθ is an inner product of a normal to the element and a vector from the lighting fixture to the element, and
r is a distance between the lighting fixture and the discrete element.
The color component value may be referred to as a color component power or energy for representing the magnitude of the color component.

It is noted in this connection that the reference data generating unit **52** designates the lighting fixture that gives the lamp color component values any one of which is greater than a predetermined threshold, such that each of the lamp-by-element tables **36** lists the identification code of only thus designated lighting fixture together with the lamp color component values. For this purpose, the reference data generating unit **52** has a filter which compares the lamp color component values of the selected lighting fixture reaching the discrete element with the respective thresholds and ignore the lighting fixture as a non-influencing fixture when all of its lamp color values are less than the corresponding thresholds. When the lighting fixture is determined for the particular discrete element to give the lamp color component values all of which are less than the corresponding thresholds, the particular discrete element is judged not to be influenced or illuminated by the lighting fixture and is given the lamp-by-element table **36** of null record. In this manner, the lamp-by-element table **36** is created for each discrete element. Thus obtained lamp-by-element tables **36** are combined to give reference data that defines an initial illuminated condition of the object, i.e., a color distribution over the entire array of the elements in combination with the object color component values stored in the object info table **32,** in the same fashion as will be discussed later with reference to a color allocation unit **72** and an image producing unit **80.**

A lighting control interface **60** is included in the system to receive an instruction selecting the lighting fixture and the associated changes in the output characteristic data and/or the position data. The lighting control interface **60** provides a form on the display **14** that prompts the user to enter the instruction through the keyboard and/or the mouse for specifying the lighting control intended by the user. A time-series of instructions are entered to give a lighting control schedule for changing the output characteristic data and/or positional data with respect to time for simulation of varying-lighting effect on the object. Such lighting control schedule may be recorded in a suitable format in an external recorder **90** and is transmitted therefrom as a control input through a lighting data input interface 62 to the lighting control interface **60.** The lighting control schedule may be given from a dedicated lighting control board **92** which is provided for actuating the lighting fixtures $\mathbf{L_{001}}$ to $\mathbf{L_{005}}$.

Each time the instruction is given, a re-calculation unit **70** responds to fetch the output characteristic data and the positional data of the selected lighting fixture from the lamp output characteristic data table **34** and the object info table **32,** to determine which one or ones of the discrete elements are influenced by the selected lighting fixture. That is, the particular discrete element is determined to be influenced or illuminated by the selected lighting fixture when any one of the lamp color component values received at that discrete element exceeds the corresponding threshold. Hereinafter, the particular discrete elements thus determined to be influenced by the particular lighting fixture are referred to simple as the active elements, and the lighting fixture assigned thereto is referred to simply as the influencing fixture, whenever it is deemed appropriate.

Then, the re-calculation unit **70** refers only to the lamp-by-element tables **36** associated with the active elements, and modifies the lamp color component values as a function of the output characteristic data and the positional data. The modification is made by using the above equation (1) for each of the color component (R, G, B) values. Thus, the re-calculation unit **70** refers the lamp-by-element tables **36** only associated with the active elements and make an arithmetic operation of modifying the color component values only related to the influencing fixture and gives the sum of each color component value of the individual active fixtures.

For instance, when the particular lighting fixture is controlled to move or change its projection angle, the re-calculation unit **70** firstly determines the active elements to be illuminated by the lighting fixture, i.e., the influencing fixture with reference to the object info table **32** and the lamp output characteristic data table **34,** and at the same time determines inactive elements which are no longer illuminated by this particular lighting fixture. Then, the re-calculation unit **70** refers to the lamp-by-element tables **36** only associated with the active elements in order to modify the lamp color component values in the record relating to the influencing fixture, and at the same time refers to the same tables **36** only associated with the inactive elements to modify or nullify the record relating to the influencing fixture. When the particular lighting fixture is added, the re-calculation unit **70** determines the active elements to be illuminated by the lighting fixture, and refers to the lamp-by-element tables **36** only associated with the active elements in order to add the record in each of the tables **36** indicative of the identifying code of the influencing fixture together with the lamp color component values specific to each of the target elements. When the particular lighting fixture is deleted, the re-calculation unit **70** determines the inactive elements, and refers to the lamp-by-element tables **36** only associated with the inactive elements to thereby nullify the records in the tables relating to this lighting fixture. For the purpose of giving consistent and concise explanation of the essence of the present invention throughout the description and claims, the terms "modify" is used with reference to the color component values to encompass the usual meanings of "add" or "nullify".

The sum of each color component value thus obtained for each of the lamp-by-element tables 36 is then fed to a color allocation unit 72 which refers to the object info table **32** and combines the sum with the object color component value for each corresponding one of the active element to give a color code indicating the color of the discrete element. For example, the color code is obtained by using the following know RGB function.

$$\text{color code} = \mathrm{RGB}(\mathrm{exp1},\ \mathrm{exp2},\ \mathrm{exp3})$$

where exp1 is a red color component value multiplied by 255,
exp2 is a green color component value multiplied by 255, and
exp3 is a blue color component value multiplied by 255.

Then, the color allocation unit **72** gives an updated color distribution over the entire array of the discrete elements and transfers the same to an image processing unit **80.** The image processing unit **80** includes an image rendering section **82** which processes the updated color distribution for rendering a view of three-dimensional illuminated scene of the object, and produces an image signal for representing the view on the display **14.** The rendering is made based upon a suitable three-dimensional modeling technique already known in the art, and is not explained in detail. Included in the image processing unit **80** is a viewpoint selecting interface **84** for selecting one of various viewpoints and instructing the image rendering section **82** to give the image of the illuminated object from the selected viewpoint. The image signal of the view is continuously updated in accordance with the lighting control schedule to give a succession of the view, i.e., a dynamic image of the view on the display **14.** At the same time, the image signal is accumulated as in a raster memory **86** to enable a playback function. Further, the system includes a control output interface **88** for connection with the external recorder **90** to record the image signal, and also with the lighting control board **92** in order to actuate the real lighting fixtures $\mathbf{L_{001}}$ to $\mathbf{L_{005}}$ in an exact manner as the simulation result.

FIG. 2 shows the structure of a program for achieving the above simulation. The program is written in one of state-of-art programming languages and is stored in a recordable medium such as a CD-ROM or the disk to be installed into and executed at the computer. The program is composed of various modules implementing the specific tasks as mentioned with reference to the system of FIG. 1. An input module **120** is provided to create the input interface **20** on the display **14** for prompting the user to enter the object data describing the three-dimensional object **200,** as shown in FIG. 4. An object processing module **122** is provided to realize the object processing unit **22** for processing the object to create the object info table **32.** A lamp setting module **140** is provided to create the lamp setting interface **40,** while a lighting data processing module **142** realizes the lighting processing unit **42** which gathers the output characteristic data and the positional data of the selected lighting fixture from the lamp output characteristic data table **34** provided in the memory **30,** in addition to the coordinates of the discrete elements from the object info table **32.** A reference data generating module **152** is provided to realize the reference data generating unit **52** for building up the lamp-by-element tables **36.** A lighting control module **160** provides the lighting control interface **60** which prompts the user to set the lighting control schedule for simulating the effect of illuminating the object. A re-calculation module **170** realizes the re-calculation unit **170** to modify the lamp color component values for the active elements with respect to the influencing fixture and to sum the lamp color component values from all of the influencing fixtures. A color allocation module **172** realizes the color allocation unit **72** to obtain the updated color distribution which is processed at an image rendering module **182** which realizes the image rendering section **82** to produce the image signal. A viewpoint selecting module **184** is also included to create the viewpoint selecting interface **84** for giving the view of the resulting illuminated object from the selected viewpoint.

The operation of the above system and program will be explained again in brief with reference to a flow chart of FIG. 3. After the object data entry and lamp setting are completed (steps 1 and 2), the object processing and the lighting data processing are made to obtain information about the coordinates of the discrete elements of the object together with the output characteristic data and positional data of the selected lighting fixture (steps 3 and 4). Then, the reference data processing is made to allocate the lamp color component values to each discrete element, building up the lamp-by-element tables **36** with respect to each of the discrete elements, as shown in FIG. 5, and combining the lamp color component values with the object color component values to realize the reference or initial view of the illuminated scene, as shown in FIG. 7. The initial view is then continuously updated, as shown in FIG. 8, to give the simulated dynamic image by repeating a loop of making the lighting control, the re-calculation of the lamp color component values, the color allocation, and the image processing (steps 6 to 9). By comparison between the views of FIGS. 7 and 8, the changing illumination effect is appreciated by the changing brightness of the portions of the object, although the actual image is represented in colors.

The system of the present invention further includes an envelop drawer **85** which determines a projection cone of the light beam emanating from each of the selected lighting fixture by referring to the output characteristic data and the positional data of the lighting fixture, in addition to the coordinates of the active elements, and draws the envelop **208** of the projection cone, either by lines or shades for adding visual emphasis on the illumination effect of the object **200,** as shown in FIG. 9. The envelop drawer **85** is also realized by a corresponding module of the program and gives a user interface **108** by which the user can selectively add the emphasis for each of the individual lighting fixtures.

## Claims

**1.** A simulation method for creating a virtual three-dimensional scene illuminated with at least one lighting fixture, said method comprising the steps of:

a) obtaining an object data with regard to a three-dimensional object to be illuminated with said lighting fixture;
b) specifying said lighting fixture and determining a position of said lighting fixture within a space of said three-dimensional object, in order to obtain output characteristic data as well as positional data of said lighting fixture;
**characterised by** the further steps of:
c) transforming said object data into an array of discrete elements and obtaining object color component values inherent to each discrete element, said object color component values being assigned to respective color components in a predetermined color space for designating the color of each discrete element;
d) processing said object data, and said output characteristic data as well as said positional data of said lighting fixture in order to obtain lamp color component values given to each of said discrete elements, said lamp component values being assigned to the respective color components in said color space for designating the color of said lighting fixture illuminating each destined one of the discrete elements;
e) providing a plurality of lamp-by-element tables each associated with each of said discrete elements, each of said lamp-by-element table storing the lamp color component values;
f) varying at least one of said output characteristic data and said positional data of said lighting fixture;
g) determining the discrete elements to be illuminated by said lighting fixture and to be influenced by said change in said output characteristic data and/or said positional data of said lighting fixture;
h) referring to said lamp-by-element tables only associated with thus determined discrete elements and modifying the lamp color component value stored in the referred lamp-by-element tables as a function of said output characteristic data and said positional data being varied;

i) allocating said modified color component values to each of the corresponding discrete elements and combining the modified color component values to said object color component values of each discrete element to realize an updated color distribution over the entire array of said discrete elements; and
j) processing said updated color distribution for rendering a view of three-dimensional illuminated scene of said object.

**2.** A simulation method as set forth in claim 1, wherein two or more lighting fixtures are selected and specified with respect to said output-characteristic data as well as said positional data, said method including the steps of

i. selecting two or more said lighting fixtures as variable components, and varying at least one of said output characteristic data and said positional data of said lighting fixtures to determine the discrete elements to be illuminated by said lighting fixtures selected as the variable components;
ii. referring to said lamp-by-element tables only associated with thus determined discrete elements and modifying the lamp color component values stored in the referred lamp-by-element tables for said lighting fixtures;
iii. summing the lamp color component values in each of the referred lamp-by-element table to give summed lamp color component values associated with each said discrete element, and allocating the summed lamp color component values to said discrete elements, thereby realizing the updated color distribution over the array of the discrete elements.

**3.** A simulation program for creating a virtual three-dimensional scene illuminated with multiple lighting fixtures, said program being adapted to be stored in a recordable medium for execution at a computer and comprising:

a) an input module which provides an input interface for entry of an object data with regard to a three-dimensional object to be illuminated with said lighting fixtures;
b) a lamp setting module which provides a lamp setting interface for selecting one or more said lighting fixtures and determining position of said selected lighting fixtures within a space of said three-dimensional object;
**characterised by** the further steps of:
c) a lighting data processing module which gives output characteristic data and positional data of said selected lighting fixtures in response to the selection of said lighting fixture and the position thereof received at said lamp setting interface;
d) an object processing module which transforming said object data into an array of discrete elements, and which obtains object color component values inherent to each discrete element, said object color component values being assigned to respective color components in a predetermined color space for designating the color of each discrete element;
e) a reference data generating module which calculates said object data, and said output characteristic data as well as said positional data of each of said selected lighting fixtures in order to obtain lamp color component values given to each of said discrete elements, said lamp component values being assigned to the respective color components in said color space for designating the color of said lighting fixture illuminating each destined one of the discrete elements, said reference data generating module providing a plurality of lamp-by-element tables each corresponding to each one of said discrete elements and storing the lamp color component values;
f) a lighting control module which provides a lighting control interface for selecting at least one of said lighting fixtures and selecting changes in at least one of said output characteristic data and said positional data of the lighting fixture;
g) a re-calculation module which determines the discrete elements to be illuminated by said at least one lighting fixture and to be influenced by said change in said output characteristic data and/or said positional data of said lighting fixture, and refers to said lamp-by-element tables only associated with thus determined discrete elements, said re-calculation module modifying the lamp color component values stored in the referred lamp-element tables as a function of said output characteristic data and said positional data being varied;
h) a color allocating module which allocates said modified color component values to each corresponding one of said discrete elements and combines the modified color component values to said object color component values of each discrete element to thereby realize a an updated color distribution over the entire array of said discrete elements;
i) an image producing module which processes said updated color distribution for rendering a view of three-dimensional illuminated scene of said object, and generating an image signal for presenting said view on a display.

**4.** A simulation system for creating a virtual three-dimensional scene illuminated with one or more lighting fixtures, said system comprising:

a) an input interface for entry of an object data with regard to a three-dimensional object to be illuminated with said lighting fixtures;

b) a lamp setting interface for selecting one or more said lighting fixtures and for determining position of said selected lighting fixtures within a space of said three-dimensional object;

**characterised by** the further steps of:

c) a lighting data processing unit which gives output characteristic data and positional data of said selected lighting fixtures in response to the selection of said lighting fixture and the position thereof received at said lamp setting interface;

d) an object processing unit which transforms said object data into an array of discrete elements, and which obtains object color component values inherent to each discrete element, said object color component values being assigned to respective color components in a predetermined color space for designating the color of each discrete element;

e) a reference data generating unit which calculates said object data, and said output characteristic data as well as said positional data of each of said selected lighting fixtures in order to obtain lamp color component values given to each of said discrete elements, said lamp component values being assigned to the respective color components in said color space for designating the color of said lighting fixture illuminating each destined one of the destined discrete elements;

f) a memory providing a plurality of lamp-by-element tables each corresponding to each one of said discrete elements and storing the lamp color component values;

g) a lighting control interface for selecting at least one of said lighting fixtures and selecting changes in at least one of said output characteristic data and said positional data of the lighting fixture;

h) a re-calculation unit which determines the discrete elements to be illuminated by said at least one lighting fixture and to be influenced by said change in said output characteristic data and/or said positional data of said lighting fixture, and refers to said lamp-by-element tables only associated with thus determined discrete elements, said re-calculation unit modifying the lamp color component values stored in the referred lamp-element tables as a function of said output characteristic data and said positional data being varied;

i) a color allocating unit which allocates said modified color component values to each corresponding one of said discrete elements and combines the modified color component values to said object color component values of each discrete element to thereby realize a an updated color distribution over the entire array of said discrete elements, and

j) an image producing unit which processes said updated color distribution for rendering a view of three-dimensional illuminated scene of said object, and generating an image signal for presenting said view on a display.

**5.** The system as set forth in claim 4, wherein said re-calculation unit includes a filter that retrieves the output characteristic data and said positional data of the lighting fixtures selected at said lamp setting interface, and determines which one or ones of said discrete elements are assigned to have the lamp color components values each of a sufficient level above a threshold, and defining thus determined discrete elements as active elements, said filter enabling said re-calculation unit to refer to said lamp-by-element tables only associated with the active elements.

**6.** The system as set forth in claim 4, wherein said image producing unit includes a viewpoint selector which provides multiple viewpoints for said three-dimensional illuminated scene of said object, and selects anyone of said viewpoints in generating said image signal for presenting said view on the display.

**7.** The system as set forth in claim 4, wherein said image producing unit produces the view of the three-dimensional illuminated scene of said object each time said re-calculating means operates to modify the lamp color component values, and generates the image signals in succession for presenting said views as a movie.

**8.** The system as set forth in claim 6, further including a raster memory that records the series of said image signals for replaying said movie.

**9.** The system as set forth in claim 8, further including a control output interface for connection with the actual lighting fixtures, said control output interface processing said image signals recorded in said raster memory to generate a control signal for actuating the lighting fixtures in coincidence with the changes made for at least one of said output characteristic data and said positional data of said lighting fixtures selected at said lighting control interface.

**10.** The system as set forth in claim 4, further including a lighting data input interface for receiving a control input which selects one or more of said lighting fixture, and describes a lighting schedule indicating a time-series of changes intended for at least one of said output characteristic data and said positional data of the selected lighting fixture, said data input interface transmitting said control input to said re-calculating unit for modifying the lamp color component values in accordance with the lighting schedule.

**Patentansprüche**

**1.** Simulationsverfahren zum Erzeugen einer virtuellen dreidimensionalen Bühne, die mit mindestens einem Beleuchtungskörper beleuchtet wird, wobei das Verfahren die Schritte umfasst:

a) Empfangen von Objektdaten bezüglich eines dreidimensionalen Objekts, das mit dem Beleuchtungskörper zu beleuchten ist;
b) Spezifizieren des Beleuchtungskörpers und Bestimmen einer Position des Beleuchtungskörpers innerhalb eines Raumes des dreidimensionalen Objekts, um Ausgabekenndaten sowie Positionsdaten des Beleuchtungskörpers zu erhalten;
**gekennzeichnet durch** die weiteren Schritte:
c) Umformen der Objektdaten in eine Matrix diskreter Elemente und Empfangen der Objektfarbkomponentenwerte, die zu jedem diskreten Element gehören, wobei die Objektfarbkomponentenwerte entsprechenden Farbkomponenten in einem vorgegebenen Farbraum für die Kennzeichnung der Farbe eines jeden diskreten Elements zugewiesen sind;
d) Verarbeiten der Objektdaten und der Ausgabekenndaten sowie der Positionsdaten des Beleuchtungskörpers, um Lampenfarbkomponentenwerte zu erhalten, die jedem der diskreten Elemente zugeteilt sind, wobei die Lampenfarbkomponentenwerte den entsprechenden Farbkomponenten in dem Farbraum für die Kennzeichnung der Farbe des Beleuchtungskörpers zugewiesen sind, der jedes vorgesehene Element von den diskreten Elementen beleuchtet;
e) Bereitstellen von mehreren Lampennebenelement-Tabellen, von denen jede mit jedem der diskreten Elemente verknüpft ist, wobei jede Lampennebenelement-Tabelle die Lampenfarbkomponentenwerte speichert;
f) Variieren von mindestens einem der Ausgabekenndaten- und Positionsdatenwerte des Beleuchtungskörpers;
g) Bestimmen der diskreten Elemente, die **durch** den Beleuchtungskörper zu beleuchten und **durch** die Veränderung in den Ausgabekenndaten und/oder den Positionsdaten des Beleuchtungskörpers zu beeinflussen sind;
h) Bezugnehmen auf die Lampennebenelement-Tabellen, die mit den so bestimmten diskreten Elementen verknüpft sind, und Abändern des Lampenfarbkomponentenwertes, der in den betreffenden Lampennebenelement-Tabellen gespeichert ist, als eine Funktion der Ausgabekenndaten und der Positionsdaten, die variiert werden;
i) Zuordnen der abgeänderten Farbkomponentenwerte zu jedem der zugehörigen diskreten Elemente und Verbinden der abgeänderten Farbkomponentenwerte mit den Objektfarbkomponentenwerten eines jeden diskreten Elements, um eine aktualisierte Farbverteilung über der gesamten Matrix der diskreten Elemente zu realisieren; und
j) Verarbeiten der aktualisierten Farbverteilung, um eine Ansicht der dreidimensionalen beleuchteten Bühne des Objekts herzustellen.

**2.** Simulationsverfahren nach Anspruch 1, wobei zwei oder mehr Beleuchtungskörper ausgewählt und bezüglich der Ausgabekenndaten sowie der Positionsdaten spezifiziert werden, wobei das Verfahren die Schritte umfasst:

i. Auswählen von zwei oder mehr Beleuchtungskörpern als veränderliche Komponenten und Variieren von mindestens einem der Ausgabekenndaten- und Positionsdatenwerte der Beleuchtungskörper, um die diskreten Elemente zu bestimmen, welche durch die Beleuchtungskörper zu beleuchten sind, die als die veränderlichen Komponenten ausgewählt wurden;
ii. Bezugnehmen nur auf die Lampennebenelement-Tabellen, die mit den so bestimmten diskreten Elementen verknüpft sind, und Abändern der in den betreffenden Lampennebenelement-Tabellen für die Beleuchtungskörper gespeicherten Lampenfarbkomponentenwerte;
iii. Summieren der Lampenfarbkomponentenwerte in jeder der betreffenden Lampennebenelement-Tabellen, um aufsummierte Lampenfarbkomponentenwerte zu liefern, die mit jedem diskreten Element verknüpft sind, und Zuordnen der summierten Farbkomponentenwerte zu den diskreten Elementen, wodurch die aktualisierte Farbverteilung über der Matrix der diskreten Elemente realisiert wird.

**3.** Simulationsprogramm zum Erzeugen einer virtuellen dreidimensionalen Bühne, die mit mehreren Beleuchtungskörpern beleuchtet wird, wobei das Programm geeignet ist, zur Ausführung an einem Computer in einem beschreibbaren Medium gespeichert zu werden, und umfassend:

a) ein Eingabemodul, das eine Eingabeschnittstelle für die Eingabe von Objektdaten bezüglich eines dreidimensionalen Objekts bereitstellt, das mit den Beleuchtungskörpern zu beleuchten ist;
b) ein Lampeneinrichtungsmodul, das eine Lampeneinrichtungsschnittstelle für das Auswählen eines oder mehrerer Beleuchtungskörper und das Bestimmen der Position der ausgewählten Beleuchtungskörper innerhalb eines Raumes des dreidimensionalen Objekts bereitstellt; **gekennzeichnet durch** die weiteren Schritte:
c) ein Lichtdatenverarbeitungsmodul, das die Ausgabekenndaten und Positionsdaten der ausgewählten Beleuchtungskörper liefert in Reaktion auf die Auswahl des Beleuchtungskörpers und seiner Position, die es an der Lampeneinrichtungsschnittstelle erhalten hat;
d) ein Objektverarbeitungsmodul, das die Objektdaten in eine Matrix diskreter Elemente umformt und das Objektfarbkomponentenwerte erhält, die zu jedem diskreten Element gehören, wobei die Objektfarbkomponentenwerte den entsprechenden Farbkomponenten in einem vorgegebenen Farbraum für die Kennzeichnung der Farbe eines jeden diskreten Elements zugewiesen sind;
e) ein Referenzdatenerzeugungsmodul, das die Objektdaten und die Ausgabekenndaten sowie die Positionsdaten eines jeden der ausgewählten Beleuchtungskörper berechnet, um Lampenfarbkomponentenwerte zu erhalten, die jedem der diskreten Elemente zugeteilt sind, wobei die Lampenfarbkomponentenwerte den entsprechenden Farbkomponenten in dem Farbraum für die Kennzeichnung der Farbe des Beleuchtungskörpers zugewiesen sind, der jedes vorgesehene Element von den diskreten Elementen beleuchtet, wobei das Referenzdatenerzeugungsmodul mehrere Lampennebenelement-Tabellen bereitstellt, von denen jede mit jedem der diskreten Elemente verknüpft ist und die Lampenfarbkomponentenwerte speichert;
f) ein Beleuchtungssteuerungsmodul, das eine Beleuchtungssteuerungsschnittstelle bereitstellt für das Auswählen von mindestens einem der Beleuchtungskörper und das Auswählen von Veränderungen in mindestens einem der Ausgabekenndaten- und Positionsdatenwerte des Beleuchtungskörpers;
g) ein Neuberechnungsmodul, das die diskreten Elemente bestimmt, die durch den mindestens einen Beleuchtungskörper zu beleuchten und **durch** die Veränderung in den Ausgabekenndaten und/oder den Positionsdaten des Beleuchtungskörpers zu beeinflussen sind, und das nur auf die Lampennebenelement-Tabellen Bezug nimmt, die mit den so bestimmten diskreten Elementen verknüpft sind, wobei das Neuberechnungsmodul die in den betreffenden Lampennebenelement-Tabellen gespeicherten Lampenfarbkomponentenwerte abändert als eine Funktion der Ausgabekenndaten und der Positionsdaten, die variiert werden;
h) ein Farbzuordnungsmodul, das die abgeänderten Farbkomponentenwerte jedem zugehörigen Element von den diskreten Elemente zuordnet und die abgeänderten Farbkomponentenwerte mit den Objektfarbkomponentenwerten eines jeden diskreten Elements verbindet, um **dadurch** eine aktualisierte Farbverteilung über der gesamten Matrix der diskreten Elemente zu realisieren; und
i) ein Bilderzeugungsmodul, das die aktualisierte Farbverteilung verarbeitet, um eine Ansicht der dreidimensionalen beleuchteten Bühne des Objekts herzustellen und um ein Bildsignal für die Wiedergabe der Ansicht auf einer Anzeigevorrichtung zu erzeugen.

**4.** Simulationsvorrichtung zum Erzeugen einer virtuellen dreidimensionalen Bühne, die mit einer oder mehreren Beleuchtungskörpern beleuchtet wird, wobei die Vorrichtung umfasst:

a) eine Eingabeschnittstelle für die Eingabe von Objektdaten bezüglich eines dreidimensionalen Objekts, das mit den Beleuchtungskörpern zu beleuchten ist;
b) eine Lampeneinrichtungsschnittstelle für das Auswählen eines oder mehrerer Beleuchtungskörper und das Bestimmen der Position der ausgewählten Beleuchtungskörper innerhalb eines Raumes des dreidimensionalen Objekts;
**gekennzeichnet durch** die weiteren Schritte:
c) eine Lichtdatenverarbeitungseinheit, die Ausgabekenndaten und Positionsdaten der ausgewählten Beleuchtungskörper in Reaktion auf die Auswahl des Beleuchtungskörpers und seiner Position liefert, die es an der Lampeneinrichtungsschnittstelle erhalten hat;
d) eine Objektverarbeitungseinheit, welche die Objektdaten in eine Matrix diskreter Elemente umformt und welche die Objektfarbkomponentenwerte erhält, die zu jedem diskreten Element gehören, wobei die Objektfarbkomponentenwerte den entsprechenden Farbkomponenten in einem vorgegebenen Farbraum für die Kennzeichnung der Farbe eines jeden diskreten Elements zugewiesen sind;

e) eine Referenzdatenerzeugungseinheit, welche die Objektdaten und die Ausgabekenndaten sowie die Positionsdaten eines jeden der ausgewählten Beleuchtungskörper berechnet, um Lampenfarbkomponentenwerte zu erhalten, die jedem der diskreten Elemente zugeteilt sind, wobei die Lampenfarbkomponentenwerte den entsprechenden Farbkomponenten in dem Farbraum für die Kennzeichnung der Farbe des Beleuchtungskörpers zugewiesen sind, der jedes vorgesehene Element von den vorgesehenen diskreten Elementen beleuchtet;
f) einen Speicher, der mehrere Lampennebenelement-Tabellen bereitstellt, von denen jede zu einem jeden diskreten Element gehört und die Lampenfarbkomponentenwerte speichert;
g) eine Beleuchtungssteuerungsschnittstelle für das Auswählen von mindestens einem der Beleuchtungskörper und das Auswählen von Veränderungen in mindestens einem der Ausgabekenndaten- und Positionsdatenwerte des Beleuchtungskörpers;
h) eine Neuberechnungseinheit, welche die diskreten Elemente bestimmt, die **durch** den mindestens einen Beleuchtungskörper zu beleuchten und **durch** die Veränderung in den Ausgabekenndaten und/oder den Positionsdaten des Beleuchtungskörpers zu beeinflussen sind, und die auf die Lampennebenelement-Tabellen Bezug nimmt, die mit den so bestimmten diskreten Elementen verknüpft sind, wobei die Neuberechnungseinheit die in den betreffenden Lampennebenelement-Tabellen gespeicherten Lampenfarbkomponentenwerte abändert als eine Funktion der Ausgabekenndaten und der Positionsdaten, die variiert werden;
i) eine Farbzuordnungseinheit, welche die abgeänderten Farbkomponentenwerte jedem zugehörigen Element von den diskreten Elemente zuordnet und die abgeänderten Farbkomponentenwerte mit den Objektfarbkomponentenwerten eines jeden diskreten Elements verbindet, um **dadurch** eine aktualisierte Farbverteilung über der gesamten Matrix der diskreten Elemente zu realisieren; und
j) eine Bilderzeugungseinheit, welche die aktualisierte Farbverteilung verarbeitet, um eine Ansicht der dreidimensionalen beleuchteten Bühne des Objekts herzustellen und um ein Bildsignal für die Wiedergabe der Ansicht auf einer Anzeigevorrichtung zu erzeugen.

**5.** Vorrichtung nach Anspruch 4, wobei die Neuberechnungseinheit ein Filter enthält, das die Ausgabekenndaten und die Positionsdaten der an der Lampeneinrichtungsschnittstelle ausgewählten Beleuchtungskörper wieder erfasst und festlegt, welches oder welche der diskreten Elemente vorgesehen sind, Lampenfarbkomponentenwerte aufzuweisen, die alle eine ausreichende Größe über einem Schwellenwert haben, und die so bestimmten diskreten Elemente als aktive Elemente definiert, wobei das Filter die Neuberechnungseinheit befähigt, nur auf die mit den aktiven Elementen verknüpften Lampennebenelement-Tabellen Bezug zu nehmen.

**6.** Vorrichtung nach Anspruch 4, wobei die Bilderzeugungseinheit einen Standpunktwähler enthält, der mehrere Standpunkte für die dreidimensionale beleuchtete Bühne des Objekts bereitstellt und irgendeinen der Standpunkte bei der Erzeugung des Bildsignals für die Darstellung der Ansicht auf der Anzeigevorrichtung auswählt.

**7.** Vorrichtung nach Anspruch 4, wobei die Bilderzeugungseinheit die Ansicht der dreidimensionalen beleuchteten Bühne des Objekts zu jedes Mal erzeugt, wenn das Neuberechnungsmittel eine Abänderung der Lampenfarbkomponentenwerte bewirkt, und die Bildsignale in einer Abfolge zur Darstellung der Ansichten als ein Film hervorbringt.

**8.** Vorrichtung nach Anspruch 6, ferner einen Rasterspeicher enthaltend, der die Abfolge der Bildsignale für die Wiedergabe des Films aufzeichnet.

**9.** Vorrichtung nach Anspruch 8, ferner eine Steuerungsausgabeschnittstelle für die Verbindung mit den aktiven Beleuchtungskörpern enthaltend, wobei die Steuerungsausgabeschnittstelle die im Rasterspeicher aufgezeichneten Bildsignale verarbeitet, um ein Steuersignal zum Betätigen der Beleuchtungskörper in Übereinstimmung mit den Veränderungen zu erzeugen, die für mindestens einen der Ausgangskenndaten- und der Positionsdatenwerte der Beleuchtungskörper, die an der Beleuchtungssteuerungsschnittstelle ausgewählt wurden, vorgenommen worden sind.

**10.** Vorrichtung nach Anspruch 4, ferner eine Beleuchtungsdateneingabeschnittstelle für den Empfang einer Steuerungseingabe enthaltend, die einen oder mehrere Beleuchtungskörper auswählt und einen Beleuchtungsablaufplan beschreibt, der eine zeitliche Abfolge von Veränderungen anzeigt, die für mindestens einen der Ausgabekenndaten- und Positionsdatenwerte des ausgewählten Beleuchtungskörpers vorgesehen sind, wobei die Dateneingabeschnittstelle die Steuerungseingabe an die Neuberechnungseinheit übermittelt, um die Lampenfarbkomponentenwerte in Übereinstimmung mit dem Beleuchtungsablaufplan abzuändern.

## Revendications

1. Procédé de simulation pour créer une scène virtuelle tridimensionnelle éclairée avec au moins un luminaire, ledit procédé comprenant les étapes qui consistent à :

   a) obtenir des données d'objet par rapport à un objet tridimensionnel à éclairer avec ledit luminaire ;
   b) spécifier ledit luminaire et déterminer une position dudit luminaire dans un espace dudit objet tridimensionnel, afin d'obtenir des données de caractéristiques de sortie aussi bien que des données de position dudit luminaire ;
   **caractérisé par** les étapes supplémentaires qui consistent à :
   c) transformer lesdites données d'objet en un réseau d'éléments discrets et obtenir des valeurs de composantes colorimétriques de l'objet inhérentes à chaque élément discret, lesdites valeurs de composantes colorimétriques de l'objet étant attribuées à des composantes colorimétriques respectives dans un espace colorimétrique prédéterminé pour désigner la couleur de chaque élément discret ;
   d) traiter lesdites données d'objet, et lesdites données de caractéristiques de sortie aussi bien que lesdites données de position dudit luminaire afin d'obtenir des valeurs de composantes colorimétriques de lampes données à chacun desdits éléments discrets, lesdites valeurs de composantes de lampes étant attribuées aux composantes colorimétriques respectives dans ledit espace colorimétrique pour désigner la couleur dudit luminaire éclairant chaque élément destiné des éléments discrets ;
   e) fournir une pluralité de tables de lampes par éléments chacune associée à chacun desdits éléments discrets, chacune de ladite table de lampes par éléments stockant les valeurs de composantes colorimétriques de lampes ;
   f) varier au moins l'une desdites données de caractéristiques de sortie et desdites données de position dudit luminaire ;
   g) déterminer les éléments discrets à éclairer par ledit luminaire et à influencer par ledit changement dans lesdites données de caractéristiques de sortie et/ou lesdites données de position dudit luminaire ;
   h) se référer auxdites tables de lampes par éléments associées uniquement aux éléments discrets ainsi déterminés et modifier la valeur des composantes colorimétriques de lampes stockées dans les tables de lampes par éléments désignées étant donné qu'une fonction desdites données de caractéristiques de sortie et desdites données de position varie ;
   i) attribuer lesdites valeurs des composantes colorimétriques modifiées à chacun des éléments discrets correspondants et combiner les valeurs des composantes colorimétriques modifiées auxdites valeurs des composantes colorimétriques d'objet de chaque élément discret afin de réaliser une distribution de couleurs mise à jour sur le réseau entier desdits éléments discrets ; et
   j) traiter ladite distribution de couleurs mise à jour pour donner une vue d'une scène tridimensionnelle éclairée dudit objet.

2. Procédé de simulation selon la revendication 1, dans lequel
   deux luminaires ou plus sont choisis et spécifiés par rapport auxdites données de caractéristiques de sortie aussi bien qu'auxdites données de position,
   ledit procédé comportant les étapes qui consistent à

   i. choisir deux luminaires ou plus comme composantes variables, et varier au moins l'une desdites données de caractéristiques de sortie et desdites données de positions desdits luminaires afin de déterminer les éléments discrets à éclairer par lesdits luminaires choisis comme composantes variables ;
   ii. désigner lesdites tables de lampes par éléments uniquement associées aux éléments discrets ainsi déterminés et modifier les valeurs des composantes colorimétriques de lampes stockées dans les tables de lampes par éléments désignées pour lesdits luminaires ;
   iii. additionner les valeurs des composantes colorimétriques de lampes dans chacune des tables de lampes par éléments désignées afin de donner des valeurs de composantes colorimétriques de lampes additionnées associées à chacun dudit élément discret, et attribuer les valeurs des composantes colorimétriques de lampes additionnées auxdits éléments discrets, réalisant ainsi la distribution de couleurs mise à jour sur le réseau des éléments discrets.

3. Programme de simulation pour créer une scène virtuelle tridimensionnelle éclairée avec plusieurs luminaires, ledit programme étant adapté pour être stocké dans un support enregistrable pour une exécution à un ordinateur et comprenant :

   a) un module d'entrée qui fournit une interface d'entrée pour une entrée de données d'objet par rapport à un objet tridimensionnel à éclairer avec lesdits luminaires ;
b) un module de réglage de lampes qui fournit une interface de réglage de lampes pour choisir un ou plusieurs dits luminaires et déterminer la position desdits luminaires choisis avec un espace dudit objet tridimensionnel ;
**caractérisé par** les étapes supplémentaires de :
c) un module de traitement de données d'éclairage qui donne des données de caractéristiques de sortie et des données de positions desdits luminaires choisis en réponse au choix dudit luminaire et de sa position reçue à ladite interface de réglage de lampes ;
d) un module de traitement d'objet qui transforme lesdites données d'objet en un réseau d'éléments discrets, et qui obtient des valeurs de composantes colorimétriques d'objet inhérentes à chaque élément discret, lesdites valeurs des composantes colorimétriques d'objet étant attribuées aux composantes colorimétriques respectives dans un espace colorimétrique prédéterminé pour désigner la couleur de chaque élément discret ;
e) un module de génération de données de référence qui calcule lesdites données d'objet, et lesdites données de caractéristiques de sortie aussi bien que lesdites données de position de chacun desdits luminaires choisis afin d'obtenir des valeurs de composantes colorimétriques de lampes données à chacun desdits éléments discrets, lesdites valeurs de composantes de lampes étant attribuées aux composantes colorimétriques respectives dans ledit espace colorimétrique pour désigner la couleur dudit luminaire éclairant chaque élément destiné des éléments discrets, ledit module de génération de données de référence fournissant une pluralité de tables de lampes par éléments chacune correspondant à chaque élément desdits éléments discrets et stockant les valeurs des composantes colorimétriques de lampes ;
f) un module de commande d'éclairage qui fournit une interface de commande d'éclairage pour choisir au moins l'un desdits luminaires et choisir les changements dans au moins l'une desdites données de caractéristiques de sortie et desdites données de position du luminaire ;
g) un module de recalcul qui détermine les éléments discrets à éclairer par ledit luminaire au moins et à influencer par ledit changement dans lesdites caractéristiques de sortie et/ou lesdites données de position dudit luminaire, et désigne lesdites tables de lampes par éléments uniquement associées aux éléments discrets ainsi déterminés, ledit module de recalcul modifiant les valeurs des composantes colorimétriques de lampes stockées dans les tables de lampes par éléments désignées étant donné qu'une fonction desdites données de caractéristiques de sortie et desdites données de position varie ;
h) un module d'attribution de couleur qui attribue lesdites valeurs de composantes colorimétriques modifiées à chaque élément correspondant desdits éléments discrets et combine les valeurs des composantes colorimétriques modifiées auxdites valeurs des composantes colorimétriques d'objet de chaque élément discret pour ainsi réaliser une distribution de couleurs mise à jour sur le réseau entier desdits éléments discrets ;
i) un module de production d'images qui traite ladite distribution de couleurs mise à jour pour donner une vue d'une scène tridimensionnelle éclairée dudit objet, et générer un signal d'image pour présenter ladite vue sur un écran.

**4.** Système de simulation pour créer une scène virtuelle tridimensionnelle éclairée avec un ou plusieurs luminaires, ledit système comprenant :

a) une interface d'entrée pour une entrée de données d'objet par rapport à un objet tridimensionnel à éclairer avec lesdits luminaires ;
b) une interface de réglage de lampes pour choisir un ou plusieurs dits luminaires et pour déterminer la position desdits luminaires choisis dans un espace dudit objet tridimensionnel ;
**caractérisé par** les étapes supplémentaires de :
c) une unité de traitement de données d'éclairage qui donne des données de caractéristiques de sortie et des données de positions desdits luminaires choisis en réponse au choix dudit luminaire et sa positon reçue à ladite interface de réglage de lampes ;
d) une unité de traitement d'objet qui transforme lesdites données d'objet en un réseau d'éléments discrets, et qui obtient des valeurs de composantes colorimétriques d'objet inhérentes à chaque élément discret, lesdites valeurs de composantes colorimétriques d'objet étant attribuées aux composantes colorimétriques respectives dans un espace colorimétrique prédéterminé pour désigner la couleur de chaque élément discret ;
e) une unité de génération de données de référence qui calcule lesdites données d'objet, et lesdites données de caractéristiques de sortie aussi bien que lesdites données de position de chacun desdits luminaires choisis afin d'obtenir des valeurs de composantes colorimétriques de lampes données à chacun desdits éléments discrets, lesdites valeurs de composantes de lampes étant attribuées aux composantes colorimétriques respectives dans ledit espace colorimétrique pour désigner la couleur dudit luminaire éclairant chaque élément destiné des éléments discrets destinés ;
f) une mémoire fournissant une pluralité de tables de lampes par éléments chacune correspondant à chaque élément desdits éléments discrets et stockant les valeurs de composantes colorimétriques de lampes ;
g) une interface de commande d'éclairage pour choisir au moins l'un desdits luminaires et choisir des changements dans au moins l'une desdites données de caractéristiques de sortie et desdites données de position du luminaire ;
h) une unité de recalcul qui détermine les éléments discrets à éclairer par ledit luminaire au moins et à influencer par ledit changement dans lesdites données de caractéristiques de sotie et/ou lesdites données de position dudit luminaire, et désigne lesdites tables de lampes par éléments uniquement associées aux éléments discrets ainsi déterminés, ladite unité de recalcul modifiant les valeurs des composantes colorimétriques de lampes stockées dans les tables de lampes par éléments désignées étant donné qu'une fonction desdites données de caractéristiques de sortie et desdites données de position varie ;
i) une unité d'attribution de couleur qui attribue lesdites valeurs de composantes colorimétriques modifiées à chaque élément correspondant desdits éléments discrets et combine les valeurs des composantes colorimétriques modifiées auxdites valeurs des composantes colorimétriques d'objet de chaque élément discret afin de réaliser ainsi une distribution de couleurs mise à jour sur le réseau entier desdits éléments discrets, et
j) une unité de production d'images qui traite ladite distribution de couleurs mise à jour pour donner une vue de la scène tridimensionnelle éclairée dudit objet, et générer un signal d'image pour présenter ladite vue sur un écran.

**5.** Système selon la revendication 4, dans lequel
ladite unité de recalcul comporte un filtre qui récupère les données de caractéristiques de sortie et lesdites données de positions des luminaires choisis à ladite interface de réglage de lampes, et détermine ledit ou lesdits élément(s) discret(s) qui est/sont attribué(s) pour avoir les valeurs des composantes colorimétriques de lampes chacune avec un niveau suffisant au-dessus d'un seuil, et définissant de ce fait les éléments discrets ainsi déterminés comme éléments actifs, ledit filtre activant ladite unité de recalcul pour désigner lesdites tables de lampes par éléments uniquement associées aux éléments actifs.

**6.** Système selon la revendication 4, dans lequel
ladite unité de production d'images comporte un sélecteur de point de vue qui fournit de plusieurs points de vue pour ladite scène tridimensionnelle éclairée dudit objet, et choisit l'un quelconque desdits points de vue dans la génération dudit signal d'image pour présenter ladite vue sur l'écran.

**7.** Système selon la revendication 4, dans lequel
ladite unité de production d'images produit la vue de la scène tridimensionnelle éclairée dudit objet chaque fois que ledit moyen de recalcul opère pour modifier les valeurs des composantes colorimétriques de lampes, et génère les signaux d'images à la suite pour présenter lesdites vues comme un film.

**8.** Système selon la revendication 6, comprenant en plus
une mémoire de trame qui enregistre les séries desdits signaux d'images pour rejouer ledit film.

**9.** Système selon la revendication 8, comportant en plus une interface de sortie de commande pour une connexion avec les luminaires effectifs, ladite interface de sortie de commande traitant lesdits signaux d'images enregistrés dans ladite mémoire de trame afin de générer un signal de commande pour actionner les luminaires coïncidant avec les changements faits au moins pour l'une desdites données de caractéristiques de sortie et desdites données de positions desdits luminaires d'éclairage choisis à ladite interface de commande d'éclairage.

**10.** Système selon la revendication 4, comportant en plus une interface d'entrée de données d'éclairage pour recevoir une entrée de commande qui choisit un ou plusieurs desdits luminaires, et décrit un programme d'éclairage indiquant une série temporelle de changements destinés au moins à l'une desdites données de caractéristiques de sortie et desdites données de position du luminaire choisi, ladite interface d'entrée de données transmettant ladite entrée de commande à ladite unité de recalcul pour modifier les valeurs des composantes colorimétriques de lampes conformément au programme d'éclairage.

FIG. 1

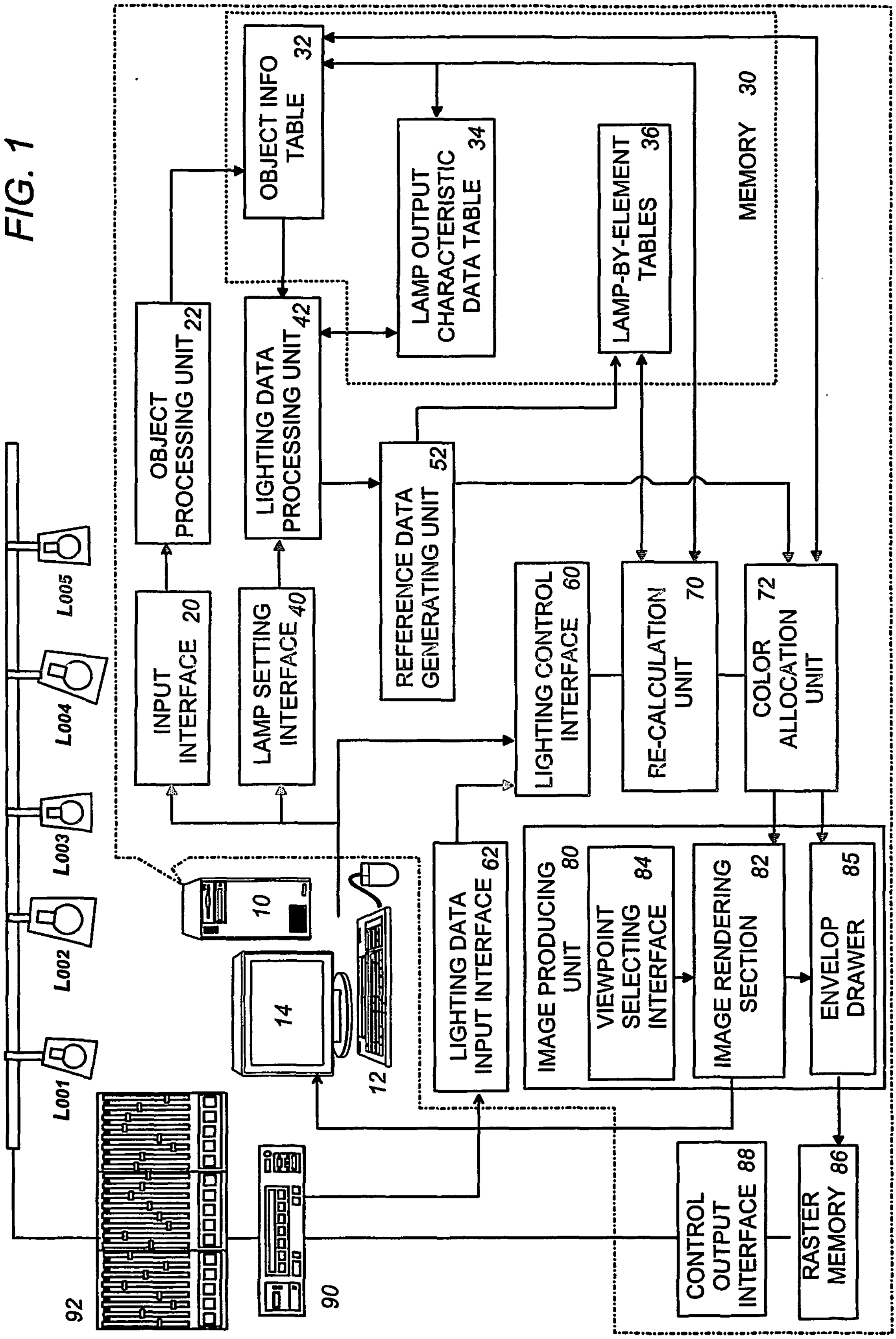
L001
L002
L003
L004
L005
OBJECT PROCESSING UNIT 22
OBJECT INFO TABLE 32
INPUT INTERFACE 20
LIGHTING DATA PROCESSING UNIT 42
LAMP SETTING INTERFACE 40
LAMP OUTPUT CHARACTERISTIC DATA TABLE 34
LAMP-BY-ELEMENT TABLES 36
MEMORY 30
REFERENCE DATA GENERATING UNIT 52
LIGHTING CONTROL INTERFACE 60
RE-CALCULATION UNIT 70
COLOR ALLOCATION UNIT 72
10
14
12
LIGHTING DATA INPUT INTERFACE 62
IMAGE PRODUCING UNIT 80
VIEWPOINT SELECTING INTERFACE 84
IMAGE RENDERING SECTION 82
ENVELOP DRAWER 85
92
90
CONTROL OUTPUT INTERFACE 88
RASTER MEMORY 86

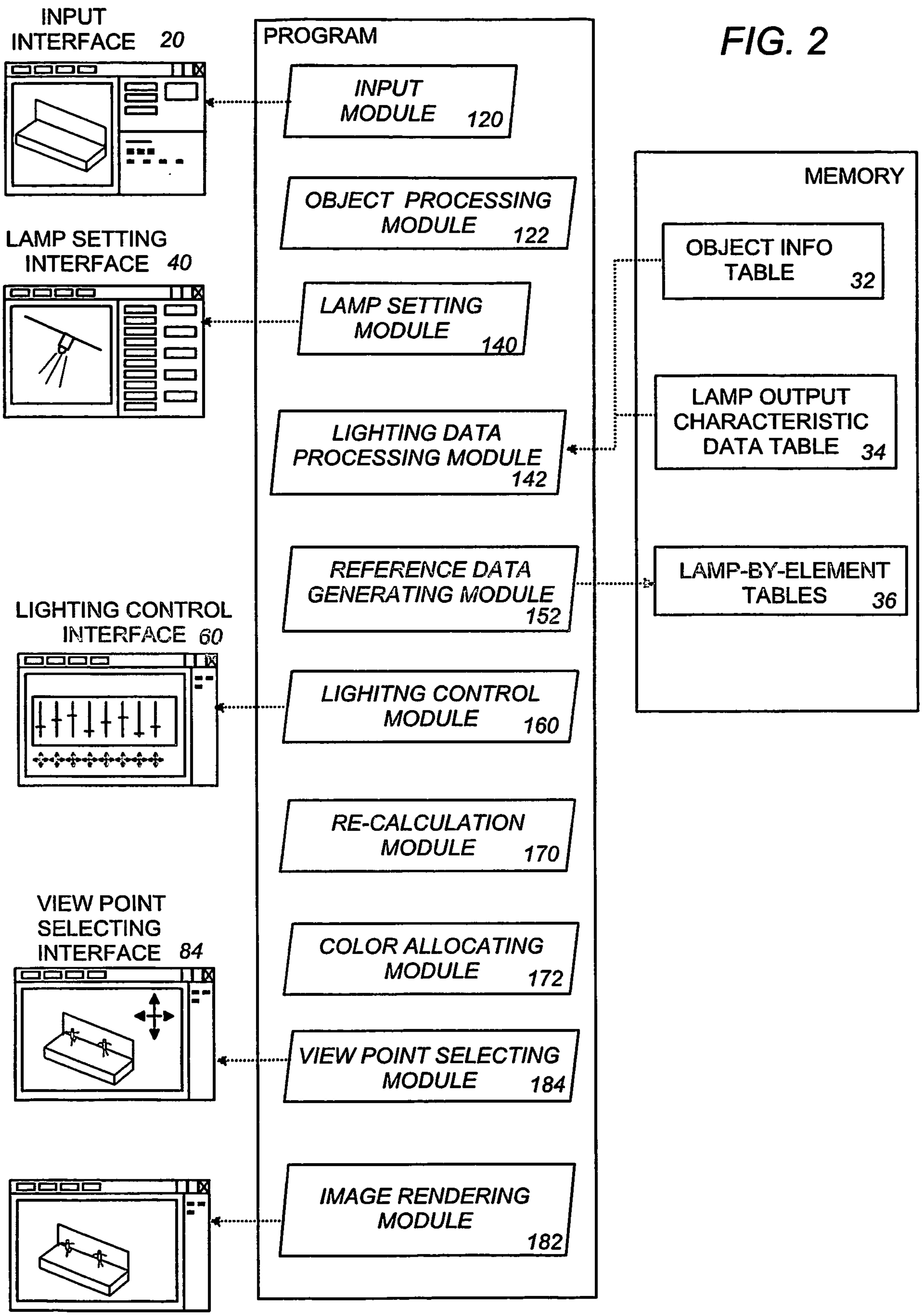
INPUT INTERFACE 20
PROGRAM
INPUT MODULE 120
OBJECT PROCESSING MODULE 122
LAMP SETTING INTERFACE 40
LAMP SETTING MODULE 140
LIGHTING DATA PROCESSING MODULE 142
REFERENCE DATA GENERATING MODULE 152
LIGHTING CONTROL INTERFACE 60
LIGHITNG CONTROL MODULE 160
RE-CALCULATION MODULE 170
VIEW POINT SELECTING INTERFACE 84
COLOR ALLOCATING MODULE 172
VIEW POINT SELECTING MODULE 184
IMAGE RENDERING MODULE 182
MEMORY
OBJECT INFO TABLE 32
LAMP OUTPUT CHARACTERISTIC DATA TABLE 34
LAMP-BY-ELEMENT TABLES 36

FIG. 2

FIG. 3

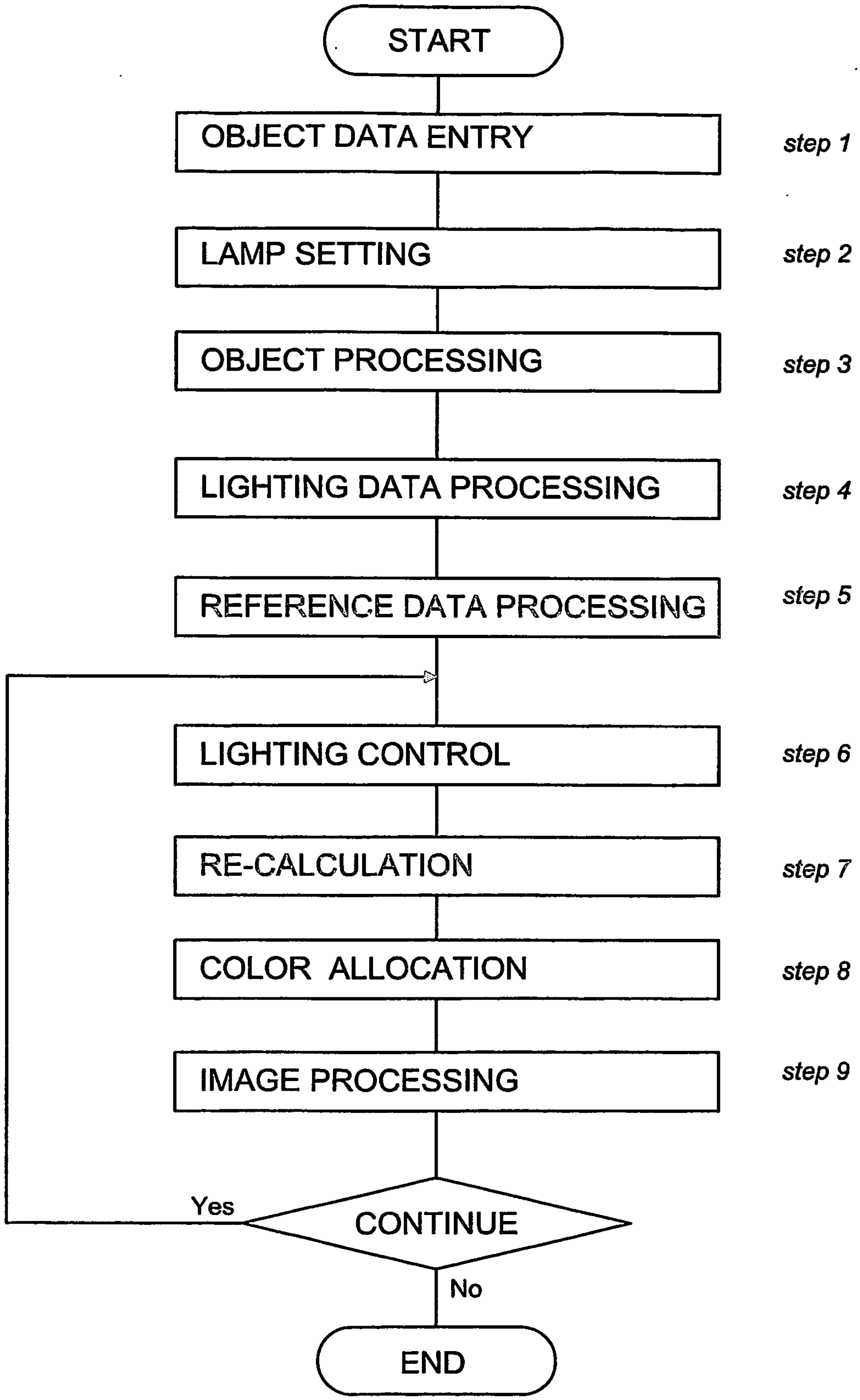
START
OBJECT DATA ENTRY
step 1
LAMP SETTING
step 2
OBJECT PROCESSING
step 3
LIGHTING DATA PROCESSING
step 4
REFERENCE DATA PROCESSING
step 5
LIGHTING CONTROL
step 6
RE-CALCULATION
step 7
COLOR ALLOCATION
step 8
IMAGE PROCESSING
step 9
Yes
CONTINUE
No
END

FIG. 4

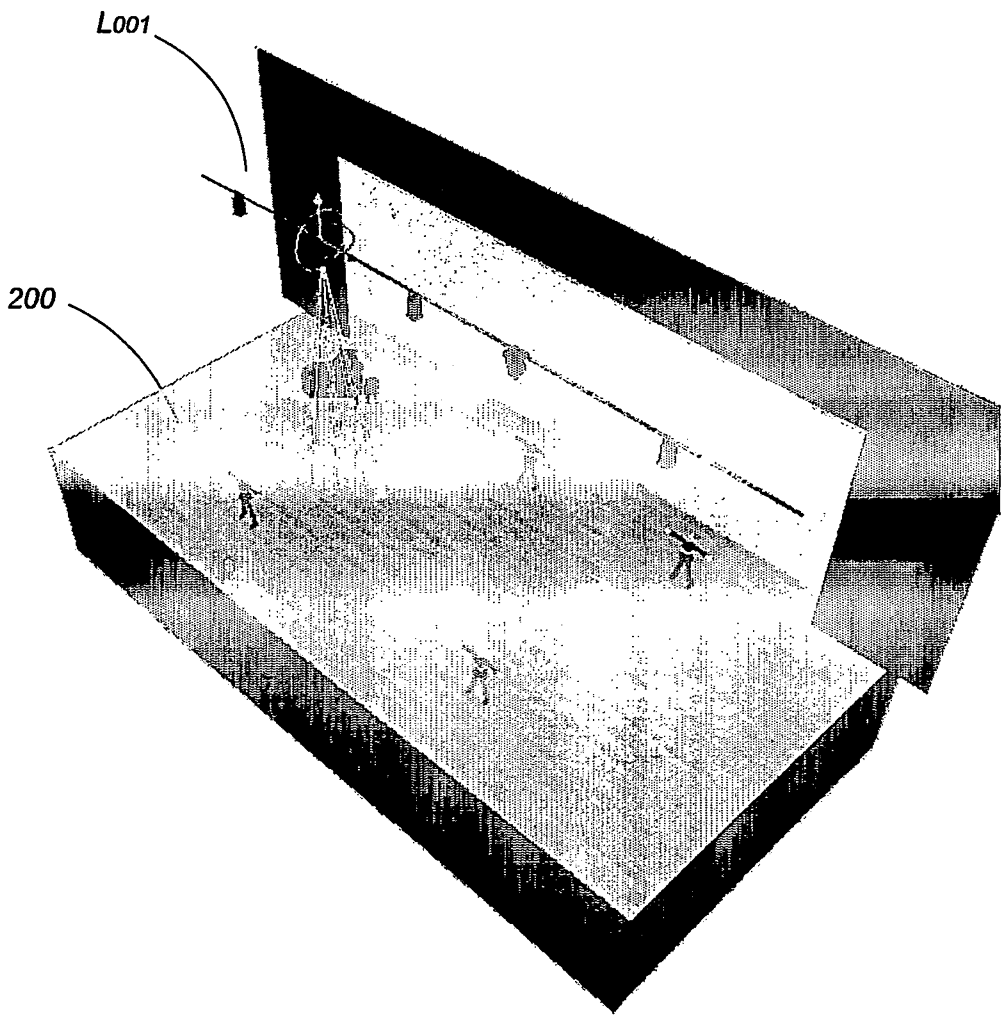

*FIG. 5*

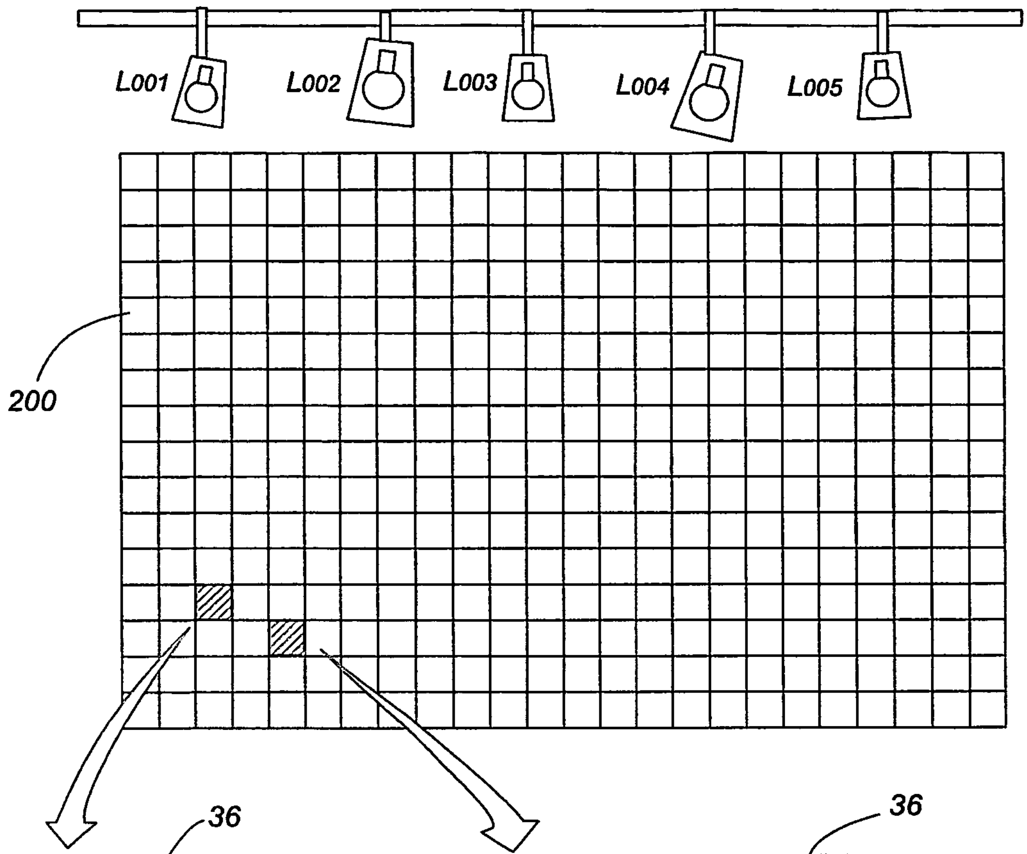


36

LAMP-BY-ELEMENT TABLE

| E(Xn, Yn) | | | |
|---|---|---|---|
| LAMP | R | G | B |
| 001 | 0.745 | 0.549 | 0.086 |
| 002 | 0.227 | 0.072 | 0.752 |
| | | | |
| ... | | | |
| SUM | 0.972 | 0.621 | 0.838 |

36

LAMP-BY-ELEMENT TABLE

| E(Xn+2, Yn-1) | | | |
|---|---|---|---|
| LAMP | R | G | B |
| 001 | 0.628 | 0.487 | 0.024 |
| 003 | 0.325 | 0.102 | 0.080 |
| | | | |
| ... | | | |
| SUM | 0.953 | 0.589 | 0.104 |

*FIG. 6*

32

| OBJECT INFO TABLE | | | | |
|---|---|---|---|---|
| ELEMENT | R | G | B | COORDINATES |
| 000001 | 0.044 | 0.052 | 0.086 | 0001, 0001 |
| 000002 | 0.024 | 0.072 | 0.034 | .... |
| | | | | .... |
| | | | | .... |
| 010011 | 0.021 | 0.014 | 0.025 | .... |

34

| LAMP OUTPUT CHARACTERISTIC DATA TABLE | | | | | | | | |
|---|---|---|---|---|---|---|---|---|
| LAMP | R | G | B | S(0,0) | S(0,10) | S(0,20) | ... | S(90,180) |
| 001 | 0.745 | 0.549 | 0.086 | 80 | 75 | 68 | ... | 20 |
| 002 | 0.227 | 0.072 | 0.752 | 58 | 42 | 35 | ... | 30 |
| ... | ... | | | ... | ... | ... | ... | |
| 099 | 0.862 | 0.392 | 0.196 | 74 | 69 | 62 | | 41 |

| LAMP-BY-ELEMENT TABLE | | | |
|---|---|---|---|
| LAMP | R | G | B |
| 001 | 0.745 | 0.549 | 0.086 |
| 002 | 0.227 | 0.072 | 0.752 |
| | | | |
| | | | |
| ... | | | |
| SUM | 0.972 | 0.621 | 0.838 |

36

FIG. 7

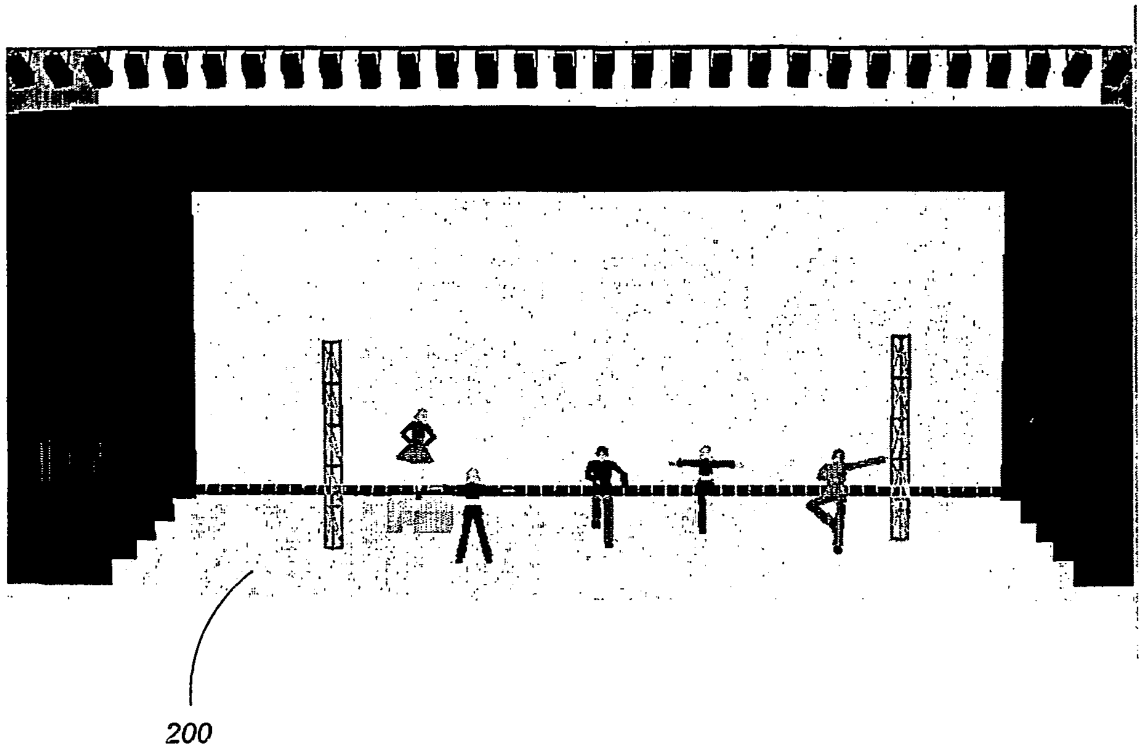


FIG. 8

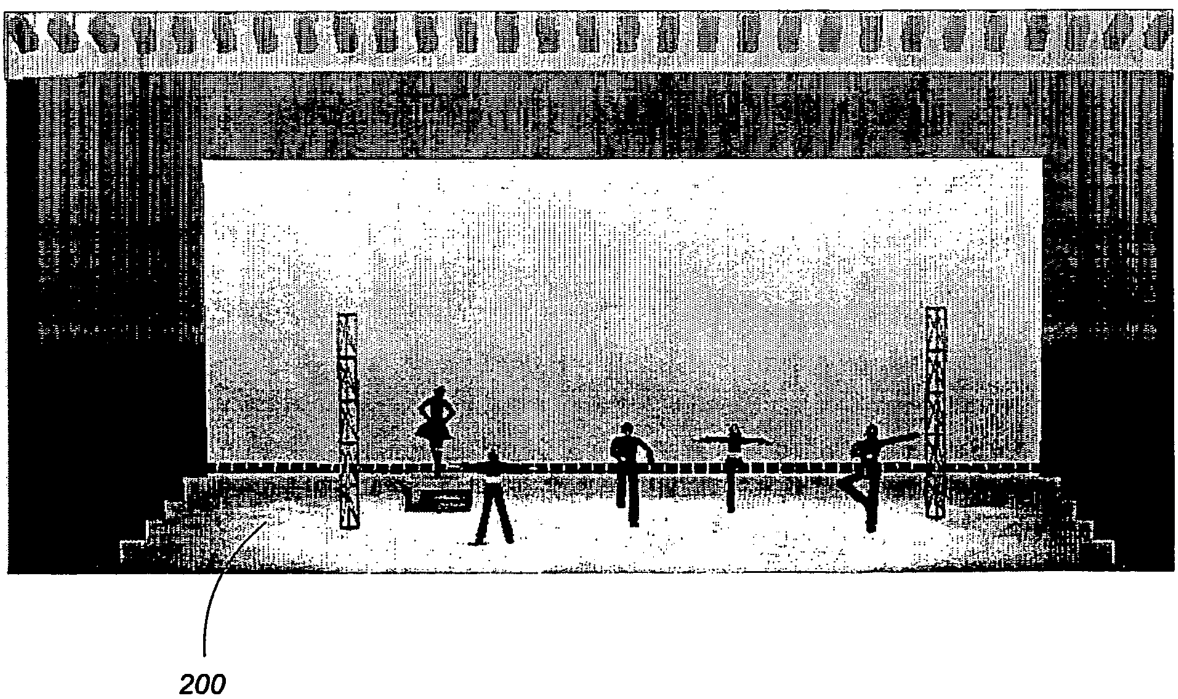

FIG. 9

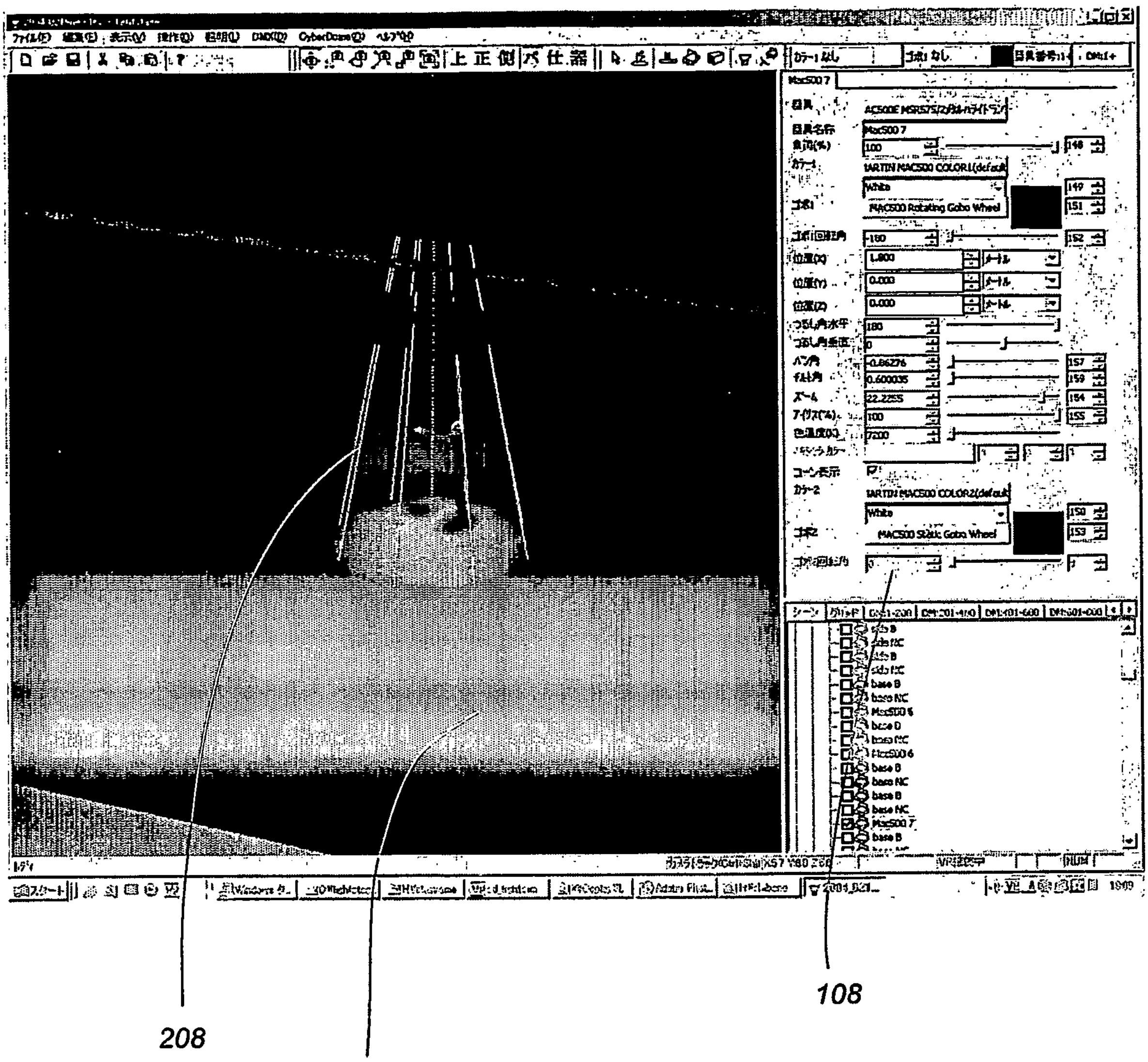

208

200

108

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0495305 B1
- US 5867166 A